# EUROPEAN PATENT APPLICATION

(11) **EP 1 544 278 A1**
(43) Date of publication of application: **22.06.2005**
(21) Application number: 04026423.6
(22) Date of filing: 08.11.2004
(51) Int. Cl.: C10M 135/36

(54) **Thiadiazoles as additives improving the friction durability of power transmission fluids**

(30) Priority: 04.12.2003 US 727950
(71) Applicant: Afton Chemical Corporation, Richmond, VA 23219 (US)
(72) Inventor: Iyer, Ramnath N., Glen Allen Virginia 23059 (US); Tersigni, Samuel H., Glen Allen, VA 23060 (US)
(74) Representative: Dunleavy, Kevin James

(57) **Abstract**

The present invention discloses compositions and methods for improving steel-on-steel friction in power transmission fluids through the use of a sufficient amount of a thiadiazole or derivatives thereof.

## Description

### FIELD

The present invention relates to transmission fluid compositions and methods for use in transmissions having steel-on-steel contact. Further, the present invention relates to compositions and methods for improving steel-on-steel friction.

### BACKGROUND

There has been a steady growth in the number of automobile manufacturers using or planning to use continuously variable transmissions (CVTs) in place of conventional automatic transmissions. CVTs have been shown to impart improved fuel efficiency and driving performance as well as reduced emissions compared to conventional automatic transmissions.

CVTs may contain a steel push-belt, chain and pulley assembly, or disk assembly (in the case of toroidal CVTs), in combination with a torque converter or some other form of a start-up device. Torque is transmitted through metal-metal contact between the pulley and the belt or chain or disk. Efficient transmission of torque requires relatively high steel-on-steel friction with minimal wear between, for example, the belt and pulley or chain and the pulley. Low friction can lead to belt slippage or even catastrophic wear. Steel-on-steel friction is therefore a critical requirement for transmission of torque, and thus, compositions and methods for improving steel-on-steel friction are increasingly desirable.

### BRIEF DESCRIPTION OF EMBODIMENTS

In an embodiment, a power transmitting fluid for use in a transmission having steel-on-steel contact may comprise a major amount of a base oil and at least one thiadiazole or derivative thereof, wherein the fluid has improved steel-on-steel friction properties. The thiadiazole may be present in an amount of about 0.05 wt% or more.

In another embodiment, a continuously variable transmission may be lubricated with a fluid as described herein.

In another embodiment, a method of lubricating a transmission having steel-on-steel contact may comprise adding to, and operating in, the transmission a fluid as described herein.

In another embodiment, an additive composition for use in a transmission having steel-on-steel contact may comprise at least one thiadiazole or derivative thereof, wherein the fluid has improved steel-on-steel friction. The thiadiazole may be present in an amount of about 0.05 wt% or more.

In another embodiment, a method of making a power transmitting fluid having steel-on-steel friction-improving capabilities may comprise adding to a major amount of a base oil a thiadiazole or derivative thereof in an amount of about 0.05 wt% or more.

In another embodiment, a power transmitting fluid for use in a transmission having a steel-on-steel contact may comprise a major amount of a base oil and at least one thiadiazole or derivative thereof present in an amount sufficient to provide a coefficient of friction of about 0.085 or greater in a steel-on-steel application.

### DETAILED DESCRIPTION OF EMBODIMENTS

The present disclosure describes compositions and methods that optimize performance requirements for steel-on-steel friction. Compositions and methods for using thiadiazoles to improve steel-on-steel friction are presented herein, providing an improved delivery of high steel-on-steel friction.

In an embodiment, a power transmitting fluid according to the present disclosure may be used in a transmission having a steel-on-steel contact. Such suitable transmissions may include various types of continuously variable transmissions (CVTs), such as push-belt, chain, and disk-type CVTs. Further, other such transmissions may include automated manuals, manual transmissions, or dual clutch assemblies.

Power transmitting fluids according to the present disclosure may comprise at least one thiadiazole or derivative thereof. Suitable thiadiazoles or derivatives thereof may include thiadiazole, alkylated thiadiazoles, mono- and/or di-substituted thiadiazoles, as well as mercapto- and other substituted thiadiazoles, such as (a) 2-hydrocarbyldithio-5-mercapto-1,3,4-thiadiazole or 2,5-bis-(hydrocarbyldithio)-1,3,4-thiadiazole and mixtures thereof; (b) 2-hydrocarbylthio-5-mercapto-1,3,4-thiadiazole; and (c) products from combining an oil soluble dispersant with 2,5-dimercapto-1,3,4-thiadiazole (DMTD); and mixtures thereof.

2,5-bis-(hydrocarbyldithio)-1,3,4-thiadiazole and its mono-substituted equivalent 2-hydrocarbylthio-5-mercapto-1,3,4-thiadiazole are commercially available as a mixture of the two compounds in a ratio of about 85 percent bis-hydrocarbyl to about 15 percent monohydrocarbyl from the Ethyl Corporation as HiTEC™ 4313 performance additive.

U.S. Pat. Nos. 2,719,125; 2,719,126; and 3,087,937 describe the preparation of various 2,5-bis(hydrocarbyl dithio)-1,3,4-thiadiazoles, that is, wherein each hydrocarbyl group can be linked to the thiadiazole through multiple (e.g., 2) sulfur atoms. The hydrocarbon group may be aliphatic or aromatic, including cyclic, alicyclic, aralkyl, aryl, and alkaryl. Such compositions are effective corrosion-inhibitors for silver, copper, silver alloys and similar metals. Such polysulfides which can be represented by the following general formula: 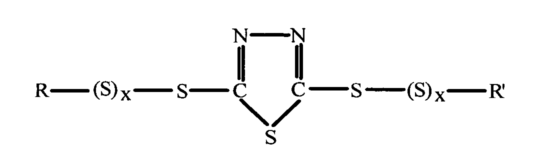 wherein R and R' may be the same or different hydrocarbon groups, and x and y be integers from 0 to about 8, and the sum of x and y being at least 1. A process for preparing such derivatives is described in U.S. Pat. No. 2,191,125 and comprising the reaction of DMTD with a suitable sulfenyl chloride or by reacting the dimercapto thiadiazole with chlorine and reacting the resulting disulfenyl chloride with a primary or tertiary mercaptan. In another procedure, DMTD is chlorinated to form the desired bissulfenyl chloride which is then reacted with at least one mercaptan (RSH and/or R' SH). U.S. Pat. No. 3,087,932 describes a one-step process for preparing 2,5-bis(hydrocarbyldithio)-1,3,4-thiadiazole. Compositions prepared in this manner are described in U.S. Pat. No. 2,749,311. It will be understood by those skilled in the art that the reactions referenced and described above may produce some amounts of the monohydrocarbyldithio-thiadiazole as well as the bis-hydrocarbyl compounds. The ratio of the two can be adjusted by varying the amounts of the reactants.

The preparation of 2-hydrocarbyldithio-5-mercapto-1,3,4-thiadiazoles having the formula: 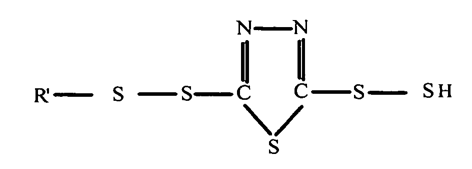 where R' is a hydrocarbyl substituent, is described in U.S. Pat. No. 3,663,561. The compositions are prepared by the oxidative coupling of equimolecular portions of a hydrocarbyl mercaptan and DMTD or its alkali metal mercaptide. The compositions are reported to be excellent sulfur scavengers and are useful in preventing copper corrosion by active sulfur. The mono-mercaptans used in the preparation of the compounds are represented by the formula R' SH wherein R' is a hydrocarbyl group containing from about 1 to about 28 carbon atoms. A peroxy compound, hypohalide, or air, or mixtures thereof, can be utilized to promote the oxidative coupling. Specific examples of the mono-mercaptan include methyl mercaptan, isopropyl mercaptan, hexyl mercaptan, decyl mercaptan, and long chain alkyl mercaptans, for example, mercaptans derived from propene polymers and isobutylene polymers especially polyisobutylenes, having about 3 to about 70 propene or isobutylene units per molecule.

The thiadiazole or derivative thereof may be present in an amount of about 0.05 wt% or more. As a further example, the thiadiazole may be present in an amount of about 0.095 wt% to about 5 wt%, or in an amount of about 0.095 wt% to about 1 wt%, or in an amount of about 0.3 wt% to about 0.5 wt%. Further, the thiadiazole or derivative thereof may be present in an amount sufficient to provide a coefficient of friction of about 0.085 or greater in a steel-on-steel application. As a further example, the thiadiazole or derivative thereof may be present in an amount sufficient to provide a coefficient of friction of about 0.09 or greater in a steel-on-steel application.

The embodiments of the present disclosure may provide a fluid or additive composition that has improved steel-on-steel properties. Such properties may be compared to a fluid comprising less than the disclosed amount of thiadiazole or derivative thereof.

In an embodiment of the present invention, the thiadiazole may be directly added to a power transmission fluid to improve steel-on-steel friction. A process for preparing the transmission fluid additives of the present invention may comprise combining in any sequence a thiadiazole with a transmission fluid at room temperature.

### Base Oils

Embodiments of the present invention may comprise a major amount of a base oil. Base or lubricating oils contemplated in preparing the power transmission fluids of the present invention may be derived from natural lubricating oils, synthetic lubricating oils, and mixtures thereof. Further, the base oil may comprise any suitable base oil or mixture of base oils for a particular application. In some embodiments, additives may be provided in an additive package concentrate. Further, some embodiments may comprise a diluent, e.g., a diluent oil. A diluent may be included to ease blending, solubilizing, and transporting the additive package. The diluent may be compatible with a base oil and/or the additive package. The diluent may be present in any suitable amount in the concentrate. A suitable diluent may comprise a process oil of lubricating viscosity.

The base oil may comprise a mineral oil, mixture of mineral oils, a synthetic oil, mixture of synthetic oils, or mixtures thereof. Suitable base oils may comprise a Group I, Group II, Group III, Group IV, or Group V base stock. Suitable base oils may be manufactured from the gas-to-liquid process.

### Other Components

In addition to formulations and methods employing a thiadiazole to improve steel-on-steel friction, the lubricating fluids of the present invention may include other optional components. These may include, for example, one or more of an extreme pressure agent; an antiwear agent; an antioxidant or an antioxidant system, such as an amine antioxidant or phenolic antioxidant; a corrosion inhibitor or a corrosion inhibitor system; a metal deactivator; an anti-rust agent; a friction modifier; a dispersant; a detergent; a dye; a seal swell agent; an anti-foam agent; a surfactant; a viscosity index improver; a perfume or odor mask; and any suitable combinations thereof. For example, while friction modifiers may be routinely added to lubricating fluids, the particular type and amount of friction modifier is unique and specific to the needs of each particular application. The embodiments of the present invention have been found to be effective when used in conjunction with a variety of these additives.

For example, nitrogen-containing ashless dispersants are well known as supplemental lubricating oil additives. Suitable ashless dispersants that may be used in the present invention include hydrocarbyl succinimides, hydrocarbyl succinamides, mixed ester/amides of hydrocarbyl-substituted succinic acid, hydroxyesters of hydrocarbyl-substituted succinic acid, and Mannich condensation products of hydrocarbyl-substituted phenols, formaldehyde and amines. Also used in the present invention are condensation products of polyamines and hydrocarbyl-substituted phenyl acids. Mixtures of any of these dispersants may also be used.

### EXAMPLE

Two transmission fluid formulations were tested and evaluated for effectiveness in modifying steel-on-steel friction. Each fluid had identical concentrations and differed only in the amount of the thiadiazole component. In this example, a mono alkyl thiadiazole was used.

The data shown in Table 1 was acquired using a push-belt CVT dynamometer test developed by Van Doorne Transmissie. Table 1 shows steel-on-steel friction results measured at low pulley ratios for two different concentrations of thiadiazole. The standard deviation of measurement at the low ratio was 0.0016, which was established through reference runs taken over an extended period of time with a reference fluid, as recommended by Van Doorne.

**Table 1:**

| **Effectiveness of Mono Alkyl Thiadiazole in Improving Steel-on-Steel Friction** | | | |
|---|---|---|---|
| | Top Pulley Coefficient of Friction | Overdrive Pulley Coefficient of Friction | Low Pulley Coefficient of Friction |
| **Formula (1)** 0.095 wt% thiadiazole | 0.0792 | 0.0830 | 0.0758 |
| **Formula (2)** 0.30 wt% thiadiazole | 0.0792 | 0.0835 | 0.0855 |

The results show that at the low ratio, steel-on-steel friction increases significantly when the weight percent of thiadiazole is increased. For the top ratio and overdrive ratios, the steel-on-steel friction results were equivalent. In evaluating the data shown in Table 1, the objective or goal in these measures of friction is to approach 0.090, preferably to be as high or close to 0.090 as possible. Thus, the results from Formula (2) are superior to those from Formula (1).

The present disclosure thus provides a composition for increasing steel-on-steel friction using thiadiazole or a derivative thereof. The compositions and methods described herein will allow the formulation of transmission fluids with applications in continuously variable transmissions as well as conventional automatic transmissions and with different kinds of start-up clutches.

As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

While the present disclosure has been described in some detail by way of illustration and example, it should be understood that the embodiments are susceptible to various modifications and alternative forms, and are not restricted to the specific embodiments set forth. It should be understood that these specific embodiments are not intended to limit the invention but, on the contrary, the intention is to cover all modifications, equivalents, and alternatives falling within the spirit and scope of the invention.

## Claims

1. An additive composition for use in a transmission having a steel-on-steel contact, including at least one thiadiazole or derivative thereof present in an amount of at least 0.5 wt%, based on the total weight of the additive composition, wherein the fluid has improved steel-on-steel friction properties, relative to a fluid not including thiadiazole.

2. A power transmitting fluid composition for use in a transmission having a steel-on-steel contact, including:
(a) a major amount of a base oil; and
(b) an additive composition as claimed in claim 1.

3. The composition of any one of claims 1-2, wherein the thiadiazole includes one or more of:
(a) 2-hydrocarbyldithio-5-mercapto-1,3,4-thiadiazole, 2,5-bis-(hydrocarbyldithio)-1,3,4-thiadiazole, and mixtures thereof;
(b) 2-hydrocarbylthio-5-mercapto-1,3,4-thiadiazole; and
(c) products from combining an oil soluble dispersant with 2,5-dimercapto-1,3,4-thiadiazole; and
(d) (d) mixtures thereof.

4. The composition of any one of claims 1-2, wherein the thiadiazole is substituted with at least one linear, branched or cyclic saturated or unsaturated hydrocarbon group.

5. The fluid of claim 2, wherein the thiadiazole is present in an amount of 0.095 wt% to 5 wt%.

6. The fluid of claim 2, wherein the thiadiazole is present in an amount of 0.3 wt% to 0.5 wt%.

7. The composition of any one of claims 1-6, wherein the transmission includes one or more of a belt-type continuously variable transmission, chain-type continuously variable transmission and toroidal continuously variable transmission.

8. The composition of any one of claims 2 and 5-6, and claim 3 when dependent on claim 2, wherein the base oil includes one or more of natural lubricating oils, synthetic lubricating oils, and mixtures thereof.

9. A continuously variable transmission lubricated with the composition of any one of claims 2 and 5-6, and claims 3 and 8 when dependent on one of claims 2 and 5-6.

10. A method of lubricating a transmission having steel-on-steel contact, including the steps of adding to the transmission a fluid as claimed in any one of claims 2 and 5-6, and claim 3 when dependent on one of claims 2 and 5-6, and operating the transmission.

11. The additive composition of claim 1, wherein the thiadiazole is present in an amount of from about 0.95 wt% to about 10 wt%.

12. The additive composition of claim 1, wherein the thiadiazole is present in an amount of from about 3 wt% to about 5 wt%.

13. A method of lubricating a transmission having steel-on-steel contact, including adding to, and operating in, the transmission a fluid composition as set forth in any one of claims 2 and 5-6, and claims 3 and 8 when dependent on claim 2.

14. A power transmitting fluid for use in a transmission having a steel-on-steel contact, including:
(a) a major amount of a base oil; and
(b) at least one thiadiazole or derivative thereof present in an amount sufficient to provide a coefficient of friction of about 0.085 or greater in a steel-on-steel application.

15. The fluid of claim 14, wherein the thiadiazole or derivative thereof is present in an amount sufficient to provide a coefficient of friction of about 0.09 or greater in a steel-on-steel application.
